# EUROPÄISCHE PATENTSCHRIFT

(11) **EP 3 831 619 B1**
(45) Veröffentlichungstag und Bekanntmachung des Hinweises auf die Patenterteilung: **03.05.2023**
(21) Anmeldenummer: 20204071.3
(22) Anmeldetag: 27.10.2020
(51) Int. Cl.: B60C 11/03, B60C 11/13

(54) **FAHRZEUGLUFTREIFEN**
PNEUMATIC TYRE
PNEUMATIQUE DE VÉHICULE

(30) Priorität: 04.12.2019 DE 102019218845
(43) Veröffentlichungstag der Anmeldung: 09.06.2021
(73) Patentinhaber: Continental Reifen Deutschland GmbH, 30165 Hannover (DE)
(72) Erfinder: Pagac, Lubomir, 30419 Hannover (DE); Schasse, Heiko, 30419 Hannover (DE); Özüduru, Ahmet, 30419 Hannover (DE)
(74) Vertreter: Continental Corporation

(56) Entgegenhaltungen:
- EP-A1- 2 179 868
- EP-A1- 2 829 421
- DE-A1-102010 060 255
- JP-A- H0 687 303
- JP-A- 2011 102 073
- US-A1- 2007 000 590

## Beschreibung

Die Erfindung betrifft einen Fahrzeugluftreifen mit einem Laufstreifen mit zumindest einer schulterseitigen Profilblockreihe mit Profilblöcken, welche außerhalb der Bodenaufstandsfläche schulterseitige Blockflanken aufweisen und welche voneinander durch Querrillen getrennt sind, die außerhalb der Bodenaufstandsfläche mit Rillenendabschnitten auslaufen und jeweils durch eine erste Blockkante und eine zweite Blockkante begrenzt sind, wobei auf den schulterseitigen Blockflanken an die Rillenendabschnitte der Querrillen angrenzend sowohl entlang der ersten Blockkante als auch entlang der zweiten Blockkante jeweils eine oberflächliche Vertiefung ausgebildet ist, wobei die Vertiefungen in Erstreckungsrichtung der Rillenendabschnitte langgestreckt sind und gegenüber dem Niveau der schulterseitigen Blockflanken an ihren tiefsten Stellen eine Tiefe von 1,0 mm bis 3,0 mm und entlang der Rillenendabschnitte der Querrillen ihre größte Längserstreckung aufweisen.

Es ist üblich, Fahrzeugluftreifen mit Laufstreifen zu versehen, bei welchen schulterseitig verlaufende Querrillen über den seitlichen Rand der Bodenaufstandsfläche hinaus und daher in den sogenannten Off-Shoulder-Bereich hinein verlaufen. Ein derartiger Fahrzeugluftreifen ist beispielsweise aus der DE 10 2017 206 383 A1 bekannt. Weitere Fahrzeugluftreifen mit Laufstreifen, bei welchen schulterseitige Querrillen über die Bodenaufstandsfläche hinaus in die Off-Shoulder-Bereiche hinein verlaufen, sind aus der EP 3 124 290 A1 und der DE 10 2015 219 434 A1 bekannt.

Es ist ferner bekannt, in den Off-Shoulder-Bereichen seichte Einschnitte zur Erhöhung der Traktion beim Fahren auf weichem Untergrund, beispielsweise auf Schnee oder Schneematsch vorzusehen. Insbesondere bei Kurvenfahrt auf tieferem, losem Schnee kommt der Ausgestaltung der Off-Shoulder-Bereiche hinsichtlich des Schneegriffs und der Traktionseigenschaften des Reifens größere Bedeutung zu.

Ein Fahrzeugluftreifen der eingangs genannten Art ist beispielsweise aus der US 2007 000 590 A1 bekannt. Der Reifen weist einen Laufstreifen mit einer schulterseitigen Profilblockreihe mit Querrillen mit über die Bodenaufstandsfläche hinausverlaufenden Rillenendabschnitten auf. Die Querrillen trennen in Umfangsrichtung langgestreckte Profilblöcke mit je zwei innerhalb der Bodenaufstandsfläche endenden Querrillen. An den schulterseitigen Blockflanken der Profilblöcke sind an den Rillenendabschnitten abschnittsweise innerhalb und abschnittsweise außerhalb der Bodenaufstandsfläche verlaufende Fasen ausgebildet. Die Fasen begrenzen oberflächliche, abgeschrägte Vertiefungen mit einer maximalen Tiefe (Tiefe an der tiefsten Stelle) von 3,0 mm. Die Fasen sollen die Rissbeständigkeit der Querrillen im Bereich des seitlichen Randes der Bodenaufstandsfläche erhöhen.

Aus der EP 2 829 421 A1 ist ein Fahrzeugluftreifen mit einem Laufstreifen mit schulterseitigen Profilblockreihen mit über den jeweiligen seitlichen Rand der Bodenaufstandsfläche hinausverlaufenden Querrillen bekannt, wobei die Rillenkanten der Querrillen über ihre gesamte Länge angefast sind. Derart ausgeführte Rillenkanten sollen die Lenkstabilität verbessern.

Die EP 2 179 868 A1 offenbart einen Fahrzugluftreifen mit einem Laufstreifen mit einer schulterseitigen Profilblockreihe mit über den seitlichen Rand der Bodenaufstandsfläche hinausverlaufenden Querrillen, bei welchen an den der Seitenwand zugewandten Endabschnitten der Rillenkanten Fasen (Schrägflächen) ausgebildet sind, welche zum Teil innerhalb und zum Teil außerhalb der Bodenaufstandsfläche verlaufen. Die Fasen sollen einen verstärkten Abrieb im Bereich der seitlichen Ränder der Bodenaufstandsfläche vermeiden.

Aus der JP 2011 102 073 A ist ein weiterer Fahrzeugluftreifen mit einem Laufstreifen mit einer schulterseitigen Profilblockreihe mit über den seitlichen Rand der Bodenaufstandsfläche hinausverlaufenden Querrillen bekannt. Die Profilböcke weisen innerhalb der Bodenaufstandsfläche eine Blockaußenfläche und außerhalb der Bodenaufstandsfläche eine schulterseitige Blockflanke auf, wobei am Anschlussbereich der Blockaußenfläche und der Blockflanke eine scharfe Randkante verläuft. Im Bereich der Randkanten sind an die Querrillen angrenzende, zum Teil innerhalb und zum Teil außerhalb der Bodenaufstandsfläche verlaufende, in Draufsicht dreieckige Eckfasen ausgebildet.

Der Erfindung liegt die Aufgabe zugrunde, bei einem Fahrzeugluftreifen der eingangs genannten Art, die Off-Shoulder-Bereiche derart zu gestalten, dass bei Fahrt in tiefem Schnee, insbesondere bei Kurvenfahrt, die Griffeigenschaften auf besonders wirkungsvolle Weise verbessert sind.

Gelöst wird die gestellte Aufgabe erfindungsgemäß dadurch, dass die Vertiefungen, in Draufsicht betrachtet, linsenförmig ausgebildet sind, wobei die zugrundliegende Linse eine plan-konvexe Linse ist, wobei die Vertiefungen jeweils einen parallel zur schulterseitigen Blockflanke verlaufenden Boden und am Niveau der jeweiligen Blockflanke eine bogenförmig verlaufende, äußere Begrenzungskante aufweisen, wobei das näher zum seitlichen Rand der Bodenaufstandsfläche befindliche Ende der äußeren Begrenzungskante zum seitlichen Rand der Bodenaufstandsfläche einen entlang der Blockkante, entlang welcher die Vertiefung ausgebildet ist, ermittelten Abstand von 0,0 mm bis 3,0 mm aufweist.

In den Vertiefungen kann sich beim Fahren auf schneebedeckter Fahrbahn, insbesondere bei größeren Schneemengen sowie bei Kurvenfahrt, Schnee besonders gut ansammeln und verdichten ohne "durchzurutschen". Über den sich dadurch ergebenden Effekt der Schnee-Schnee-Reibung lassen sich auf den Reifen wirkende Lenkkräfte besonders gut auf die Fahrbahn übertragen.

Der außerhalb der Bodenaufstandsfläche am seitlichen Rand der Bodenaufstandsfläche angrenzende bzw. in dessen unmittelbarer Nähe befindliche Laufstreifenabschnitt kommt vorteilhafter Weise schon beim Fahren in einer dünneren Schneeschicht mit Schnee in Kontakt, sodass die Vertiefungen auch bei einer relativ dünnen Schneeschicht als Schneetaschen wirken können.

Für die beschriebene Wirkungsweise der Vertiefungen ist es ferner von zusätzlichem Vorteil, wenn sie jeweils einen parallel zur schulterseitigen Blockflanke verlaufenden Boden aufweisen und wenn sie durch den Boden und zumindest eine Seitenfläche, welche mit dem Boden einen Winkel von 90° bis 95° einschließt, begrenzt sind.

Gemäß weiteren bevorzugten Ausführungsformen sind bestimmte Dimensionen der Vertiefungen für ein Verdichten von eindringendem Schnee besonders vorteilhaft.

Insbesondere weisen die Vertiefungen - ermittelt entlang einer die Enden ihrer äußeren Begrenzungskante verbindenden Linie - eine Länge von 5,0 mm bis 10,0 mm, insbesondere von mindestens 7,0 mm, auf. Des Weiteren sollten die Vertiefungen zwischen der Linie, welche die Enden ihrer äußeren Begrenzungskante verbindet, und ihrer äußeren Begrenzungskante eine senkrecht zur Linie gemessene maximale Breite von 20% bis 50%, insbesondere von höchstens 30%, ihrer Länge aufweisen.

Eine weitere bevorzugte Ausführung ist dadurch gekennzeichnet, dass der Abstand, welchen das näher zum seitlichen Rand der Bodenaufstandsfläche befindliche Ende der äußeren Begrenzungskante jeder Vertiefung zum seitlichen Rand der Bodenaufstandsfläche entlang der Blockkante aufweist, bis zu 1,0 mm beträgt.

Die Verdichtung und Ansammlung von Schnee in den Vertiefungen lassen sich weiter verbessern, wenn die Tiefe der Vertiefungen bis zu 2,5 mm, insbesondere bis zu 2,0 mm, beträgt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Umfangsabschnitt einer schulterseitigen Profilblockreihe eines Laufstreifens eines Fahrzugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2 und
Fig. 5 eine Schrägansicht gemäß der in Fig. 2 durch den Pfeil S₅ angedeuteten Sichtrichtung.

Gemäß der Erfindung ausgeführte Fahrzeugluftreifen sind insbesondere Reifen in Radialbauart für Personenkraftwagen, Vans oder Light-Trucks, wobei die Reifen zum Fahren unter winterlichen Bedingungen vorgesehen sind.

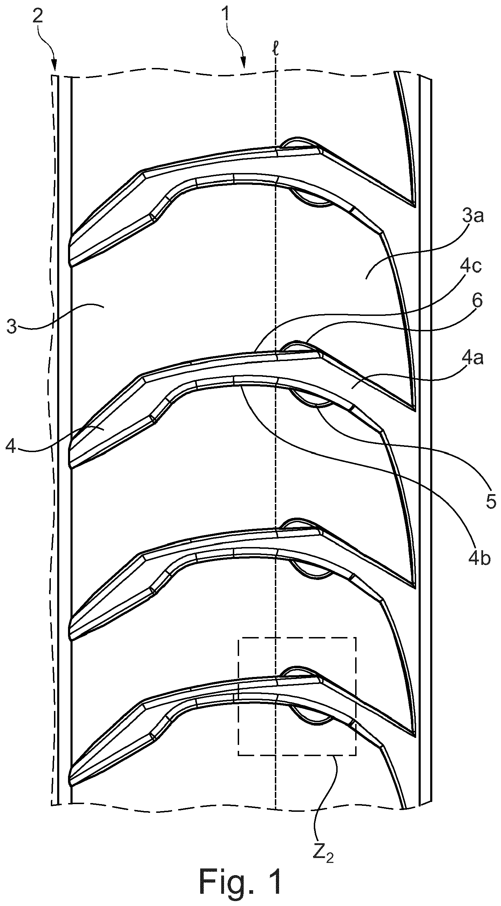

Fig. 1 zeigt einen Umfangsabschnitt einer schulterseitigen Profilblockreihe 1, welche laufstreifeninnenseitig durch eine Umfangsrille 2 begrenzt ist. Bevorzugter Weise ist in der zweiten, nicht gezeigten Laufstreifenschulter eine zur schulterseitigen Profilblockreihe 1 analog ausgeführte, weitere schulterseitige Profilblockreihe ausgebildet. Der im Bereich der schulterseitigen Profilblockreihe 1 verlaufende seitliche Rand der Bodenaufstandsfläche (ermittelt mit einem auf einer Normfelge montierten Reifen, Last bei 70% der maximalen Tragfähigkeit, Innendruck 85% des Normdruckes, gemäß ETRTO-Standards) ist durch eine gestrichelte Linie l gekennzeichnet.

Die schulterseitige Profilblockreihe 1 setzt sich aus einer Vielzahl von in Umfangsrichtung aufeinanderfolgenden Profilblöcken 3 zusammen, welche durch in die Umfangsrille 2 einmündende Querrillen 4 voneinander getrennt sind und außerhalb der Bodenaufstandsfläche eine zur nicht gezeigten Seitenwand verlaufende schulterseitige Blockflanke 3a aufweisen. Die Querrillen 4 verlaufen beim gezeigten Ausführungsbeispiel in Draufsicht bogenförmig sowie parallel zueinander, erstrecken sich insgesamt im Wesentlichen in axialer Richtung und weisen außerhalb der Bodenaufstandsfläche jeweils einen in insbesondere bekannter Weise seichter werdenden, in Richtung zur nicht gezeigten Seitenwand verlaufenden Rillenendabschnitt 4a auf. Die Querrillen 4 sind jeweils durch eine bogeninnenseitige Blockkante 4b und eine bogenaußenseitige Blockkante 4c begrenzt.

Auf den Blockflanken 3a der Profilblöcke 3 ist im Bereich und entlang der Blockkanten 4b, 4c jeweils eine langestreckte und oberflächlich ausgebildete Vertiefung 5, 6 vorgesehen, sodass an jeden Rillenendabschnitt 4a eine Vertiefung 5 und eine Vertiefung 6 angrenzt. Die Vertiefung 5 ist entlang der bogeninnenseitigen Blockkante 4b und die Vertiefung 6 ist entlang der bogenaußenseitigen Blockkante 4c ausgebildet.

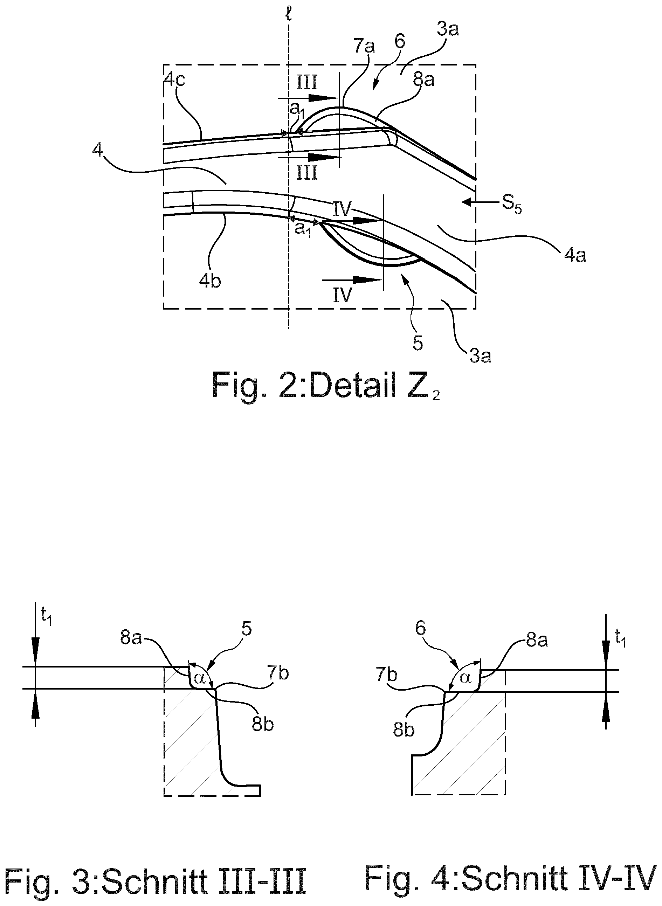

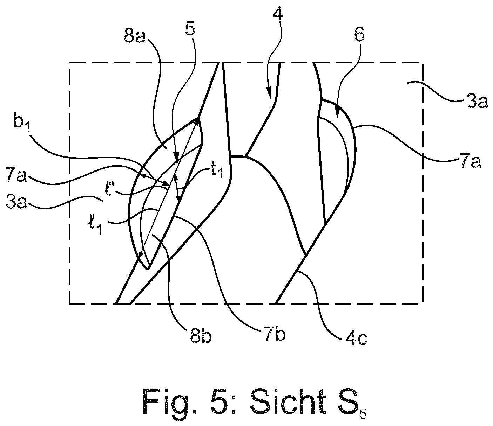

Wie insbesondere Fig. 2 zeigt, sind die Vertiefungen 5, 6, in Draufsicht auf die Blockflanken 3a betrachtet, in Erstreckungsrichtung der Querrille 4 langgestreckt sowie linsenförmig ausgebildet, wobei die zugrundliegende Linse eine plan-konvexe Linse ist. Entsprechend ihrer Linsenform weisen die Vertiefungen 5, 6 an den Rillenendabschnitten 4a der Querrillen 4 ihre größte Erstreckungslänge auf. Gemäß Fig. 5 weisen die Vertiefungen 5, 6 am Niveau der jeweiligen Blockflanke 3a eine bogenförmig, beispielsweise kreisbogenartig, verlaufende, äußere Begrenzungskante 7a auf. Die äußere Begrenzungskante 7a der Vertiefung 6 geht beim gezeigten Ausführungsbeispiel an ihrem vom seitlichen Rand der Bodenaufstandsfläche weiter weg befindlichen Ende knickfrei in die bogenaußenseitige Blockkante 4c über.

Die näher zum seitlichen Rand der Bodenaufstandsfläche befindlichen Enden der äußeren Begrenzungskanten 7a Vertiefungen 5, 6 weisen zum seitlichen Rand der Bodenaufstandsfläche (Linie 1), entlang der Blockkanten 4b bzw. 4c ermittelt, einen Abstand a₁ (Fig. 2) von bis zu 3,0 mm, insbesondere von bis zu 1,0 mm, auf. Die Vertiefungen 5, 6 können auch an den seitlichen Rand der Bodenaufstandsfläche angrenzen.

Gemäß Fig. 5 weisen die Vertiefungen 5, 6 - ermittelt entlang einer die Enden ihrer äußeren Begrenzungskante 7a verbindenden Linie l' - eine Länge l₁ von 5,0 mm bis 10,0 mm, insbesondere von mindestens 7,0 mm, auf. Ferner weisen die Vertiefungen 5, 6 zwischen der Linie l` und der äußeren Begrenzungskante 7a, eine senkrecht zur Linie l' gemessene maximale Breite bi von 20% bis 50%, insbesondere von bis zu 30%, der Länge l₁ auf.

Die Vertiefungen 5, 6 weisen jeweils einen parallel zu den Blockflanken 3a verlaufenden, kreissegmentförmigen Boden 8b auf, welcher beim Rillenendabschnitt 4a durch eine gerade und/oder parallel zur jeweiligen Blockkante 4b, 4c verlaufende, innere Begrenzungskante 7b begrenzt ist. Der Boden 8b der Vertiefungen 5, 6 befindet sich in einer zwischen der Linie l' und der inneren Begrenzungskante 7b ermittelten konstanten Tiefe ti (siehe insbesondere Fig. 3, Fig. 4) von 1,0 mm bis 3,0 mm, insbesondere von bis zu 2,5 mm, und besonders bevorzugt von bis zu 2,0 mm. Vom Boden 8b verläuft eine kreisbogenartig nach innen gewölbten Seitenfläche 8a zur äußeren Begrenzungskante 7a. Wie Fig. 2 bis Fig. 4 in Kombination miteinander zeigen, schließen die Seitenflächen 8a mit dem jeweils anschließenden Boden 8b, in einem Querschnitt senkrecht zur äußeren Begrenzungskante 7a sowie gleichzeitig senkrecht auf die Blockflanke 3a betrachtet (siehe Schnittlinien III- III und IV-IV in Fig. 2), einen Winkel α (Fig. 3, Fig. 4) von 90° bis 95° ein.

Die Erfindung ist auf das beschriebene Ausführungsbeispiel nicht beschränkt.

Die Tiefe der Vertiefungen kann über ihre Erstreckung variieren. Die Form der Vertiefungen kann von der beschriebenen Form abweichen.

### Bezugsziffernliste

- 1: schulterseitige Profilblockreihe
- 2: Umfangsrille
- 3: schulterseitiger Profilblock
- 3a: schulterseitige Blockflanke
- 4: Querrille
- 4a: Rillenendabschnitt
- 4b: bogeninnenseitige Blockkante
- 4c: bogenaußenseitige Blockkante
- 5: Vertiefung
- 6: Vertiefung
- 7a: äußere Begrenzungskante
- 7b: innere Begrenzungskante
- 8a: Seitenfläche
- 8b: Boden
- a₁: Abstand
- b₁: maximale Breite
- l: Linie (seitliche Rand der Bodenaufstandsfläche)
- l': Linie
- l₁: Länge
- S₅: Pfeil (Sichtrichtung)
- t₁: Tiefe
- α: Winkel

## Patentansprüche

1. Fahrzeugluftreifen mit einem Laufstreifen mit zumindest einer schulterseitigen Profilblockreihe (1) mit Profilblöcken (3), welche außerhalb der Bodenaufstandsfläche schulterseitige Blockflanken (3a) aufweisen und welche voneinander durch Querrillen (4) getrennt sind, die außerhalb der Bodenaufstandsfläche mit Rillenendabschnitten (4a) auslaufen und jeweils durch eine erste Blockkante (4b) und eine zweite Blockkante (4c) begrenzt sind, wobei auf den schulterseitigen Blockflanken (3a) an die Rillenendabschnitte (4a) der Querrillen (4) angrenzend sowohl entlang der ersten Blockkante (4b) als auch entlang der zweiten Blockkante (4c) jeweils eine oberflächliche Vertiefung (5, 6) ausgebildet ist,
wobei die Vertiefungen (5, 6) in Erstreckungsrichtung der Rillenendabschnitte (4a) langgestreckt sind und gegenüber dem Niveau der schulterseitigen Blockflanken (3a) an ihren tiefsten Stellen eine Tiefe (t₁) von 1,0 mm bis 3,0 mm und entlang der Rillenendabschnitte (4a) der Querrillen (4) ihre größte Längserstreckung aufweisen,
**dadurch gekennzeichnet,**
**dass** die Vertiefungen (5, 6), in Draufsicht betrachtet, linsenförmig ausgebildet sind, wobei die zugrundeliegende Linse eine plan-konvexe Linse ist, wobei die Vertiefungen (5, 6) jeweils einen parallel zur schulterseitigen Blockflanke (3a) verlaufenden Boden (8b) und am Niveau der jeweiligen Blockflanke (3a) eine bogenförmig verlaufende, äußere Begrenzungskante (7a) aufweisen, wobei das näher zum seitlichen Rand (l) der Bodenaufstandsfläche befindliche Ende der äußeren Begrenzungskante (7a) zum seitlichen Rand (l) der Bodenaufstandsfläche einen entlang der Blockkante (4b), entlang welcher die Vertiefung (5, 6) ausgebildet ist, ermittelten Abstand (a₁) von 0,0 mm bis 3,0 mm aufweist.

2. Fahrzeugluftreifen nach Anspruch 1, **dadurch gekennzeichnet, dass** die Vertiefungen (5, 6) durch den Boden (8b) und zumindest eine Seitenfläche (8a), welche mit dem Boden (8b) einen Winkel (α) von 90° bis 95° einschließt, begrenzt sind.

3. Fahrzeugluftreifen nach Anspruch 1 oder 2, **dadurch gekennzeichnet, dass** die Vertiefungen (5, 6) - ermittelt entlang einer die Enden ihrer äußeren Begrenzungskante (7a) verbindenden Linie (l') - eine Länge (l₁) von 5,0 mm bis 10,0 mm, insbesondere von mindestens 7,0 mm, aufweisen.

4. Fahrzeugluftreifen nach Anspruch 3, **dadurch gekennzeichnet, dass** die Vertiefungen (5, 6) zwischen der Linie (l'), welche die Enden ihrer äußeren Begrenzungskante (7a) verbindet, und ihrer äußeren Begrenzungskante (7a) eine senkrecht zur Linie (l') gemessene maximale Breite (b₁) von 20% bis 50%, insbesondere von höchstens 30%, ihrer Länge (l₁) aufweisen.

5. Fahrzeugluftreifen nach einem der Ansprüche 1 bis 4, **dadurch gekennzeichnet, dass** der Abstand (a₁), welchen das näher zum seitlichen Rand (l) der Bodenaufstandsfläche befindliche Ende der äußeren Begrenzungskante (7a) jeder Vertiefung (5, 6) zum seitlichen Rand (l) der Bodenaufstandsfläche entlang der Blockkante (4b) aufweist, bis zu 1,0 mm beträgt.

6. Fahrzeugluftreifen nach einem der Ansprüche 1 bis 5, **dadurch gekennzeichnet, dass** die Tiefe (t₁) der Vertiefungen (5, 6) bis zu 2,5 mm, insbesondere bis zu 2,0 mm, beträgt.

## Claims

1. Pneumatic vehicle tyre having a tread with at least one shoulder-side profile block row (1) with profile blocks (3) which have shoulder-side block flanks (3a) outside the ground contact patch and which are separated from one another by transverse grooves (4) that run out with groove end portions (4a) outside the ground contact patch and that are each delimited by a first block edge (4b) and a second block edge (4c),
wherein a respective superficial depression (5, 6) is formed both along the first block edge (4b) and along the second block edge (4c) on the shoulder-side block flanks (3a) so as to adjoin the groove end portions (4a) of the transverse grooves (4),
wherein the depressions (5, 6) are elongated in an extent direction of the groove end portions (4a) and have, at the deepest points thereof, a depth (t₁) of 1.0 mm to 3.0 mm in relation to the level of the shoulder-side block flanks (3a) and have their greatest longitudinal extent along the groove end portions (4a) of the transverse grooves (4),
**characterized**
**in that** the depressions (5, 6), seen in plan view, are of lenticular form, wherein the underlying lens is a plano-convex lens, wherein the depressions (5, 6) each have a base (8b) which runs parallel to the shoulder-side block flank (3a), and, at the level of the respective block flank (3a), an outer delimiting edge (7a) which runs in an arcuate manner, wherein that end of the outer delimiting edge (7a) which is closer to the lateral periphery (I) of the ground contact patch has a spacing (a₁), determined along the block edge (4b) along which the depression (5, 6) is formed, of 0.0 mm to 3.0 mm to the lateral periphery (I) of the ground contact patch.

2. Pneumatic vehicle tyre according to Claim 1, **characterized in that** the depressions (5, 6) are delimited by the base (8b) and at least one side surface (8a), which encloses an angle (α) of 90° to 95° with the base (8b).

3. Pneumatic vehicle tyre according to Claim 1 or 2, **characterized in that** the depressions (5, 6) have - determined along a line (l') connecting the ends of the outer delimiting edge (7a) thereof - a length (l₁) of 5.0 mm to 10.0 mm, in particular of at least 7.0 mm.

4. Pneumatic vehicle tyre according to Claim 3, **characterized in that** the depressions (5, 6) have, between the line (l') which connects the ends of the outer delimiting edge (7a) thereof and the outer delimiting edge (7a) thereof, a maximum width (b₁) of 20% to 50%, in particular of at most 30%, of the length (l₁) thereof, said width being measured perpendicularly with respect to the line (l').

5. Pneumatic vehicle tyre according to one of Claims 1 to 4, **characterized in that** the spacing (a₁) which that end of the outer delimiting edge (7a) of each depression (5, 6) which is closer to the lateral periphery (I) of the ground contact patch has to the lateral periphery (I) of the ground contact patch along the block edge (4b) is up to 1.0 mm.

6. Pneumatic vehicle tyre according to one of Claims 1 to 5, **characterized in that** the depth (t₁) of the depressions (5, 6) is up to 2.5 mm, in particular up to 2.0 mm.

## Revendications

1. Pneumatique de véhicule comprenant une bande de roulement avec au moins une rangée (1) de blocs profilés côté épaulement ayant des blocs profilés (3), qui, à l'extérieur de la surface de contact avec le sol, présentent des flancs de blocs (3a) côté épaulement et qui sont séparés les uns des autres par des rainures transversales (4), qui, à l'extérieur de la surface de contact avec le sol, se terminent par des sections (4a) d'extrémité de rainure et qui sont délimitées chacune par une première arête de bloc (4b) et une deuxième arête de bloc (4c), un creux superficiel (5, 6) étant formé sur chacun des flancs de bloc (3a) côté épaulement, de manière adjacente aux sections (4a) d'extrémité de rainure des rainures transversales (4), aussi bien le long de la première arête de bloc (4b) que le long de la deuxième arête de bloc (4c),
les creux (5, 6) étant allongés dans la direction d'extension des sections (4a) d'extrémité de rainure et présentant, par rapport au niveau des flancs de bloc (3a) côté épaulement, une profondeur (t₁) de 1,0 mm à 3,0 mm à leurs endroits les plus profonds et leur plus grande extension longitudinale le long des sections (4a) d'extrémité de rainure des rainures transversales (4),
**caractérisé**
**en ce que** les creux (5, 6), vus de dessus, sont réalisés en forme de lentille, la lentille sous-jacente étant une lentille plan-convexe, les creux (5, 6) ayant chacun un fond (8b) s'étendant parallèlement au flanc de bloc (3a) côté épaulement et une arête (7a) de délimitation extérieure s'étendant en forme d'arc au niveau du flanc de bloc (3a) respectif, l'extrémité de l'arête (7a) de délimitation extérieure la plus proche du bord latéral (1) de la surface de contact avec le sol présentant, par rapport au bord latéral (1) de la surface de contact avec le sol, une distance (a₁) de 0,0 mm à 3,0 mm, déterminée le long de l'arête de bloc (4b) le long de laquelle est formé le creux (5, 6).

2. Pneumatique pour véhicule selon la revendication 1, **caractérisé en ce que** les creux (5, 6) sont délimités par le fond (8b) et au moins une surface latérale (8a) qui forme avec le fond (8b) un angle (α) de 90° à 95°.

3. Pneumatique pour véhicule selon la revendication 1 ou la revendication 2, **caractérisé en ce que** les creux (5, 6) - déterminés le long d'une ligne (l') reliant les extrémités de leur arête (7a) de délimitation extérieure - ont une longueur (l₁) de 5,0 mm à 10,0 mm, en particulier d'au moins 7,0 mm.

4. Pneumatique pour véhicule selon la revendication 3, **caractérisé en ce que** les creux (5, 6) entre la ligne (l') reliant les extrémités de leur arête (7a) de délimitation extérieure et leur arête (7a) de délimitation extérieure ont une largeur maximale (b₁), mesurée perpendiculairement à la ligne (l'), allant de 20% à 50%, notamment d'au plus 30%, de leur longueur (l₁).

5. Pneumatique pour véhicule selon l'une quelconque des revendications 1 à 4, **caractérisé en ce que** la distance (a₁) que présente l'extrémité de l'arête (7a) de délimitation extérieure de chaque creux (5, 6) la plus proche du bord latéral (1) de la surface de contact avec le sol par rapport au bord latéral (1) de la surface de contact avec le sol le long de l'arête de bloc (4b) est inférieure ou égale à 1,0 mm.

6. Pneumatique de véhicule selon l'une quelconque des revendications 1 à 5, **caractérisé en ce que** la profondeur (t₁) des creux (5, 6) est inférieure ou égale à 2,5 mm, en particulier est inférieure ou égale à 2,0 mm.
